# FASCICULE DE BREVET EUROPEEN

(11) **EP 2 429 797 B1**
(45) Date de publication et mention de la délivrance du brevet: **20.11.2013**
(21) Numéro de dépôt: 10728737.7
(22) Date de dépôt: 11.05.2010
(51) Int. Cl.: B29C 49/48, B29C 49/70

(54) **SUPPORT DE FOND DE MOULE**
BODENFORMHALTER
BOTTOM MOULD SUPPORT

(30) Priorité: 14.05.2009 FR 0953203
(43) Date de publication de la demande: 21.03.2012
(73) Titulaire: Sidel Participations, 76930 Octeville sur Mer (FR)
(72) Inventeur: LANGLOIS, Jean-Christophe, F-76930 Octeville-sur-mer (FR)
(74) Mandataire: Cabinet Plasseraud
(86) Numéro de dépôt international: PCT/FR2010/050909
(87) Numéro de publication internationale: WO 2010/130940

(56) Documents cités:
- WO-A1-2006/103344
- FR-A1- 2 714 631
- US-A1- 2008 283 533

## Description

La présente invention concerne un perfectionnement au matériel utilisé pour mouler des récipients, comme des bouteilles, par une opération d'étirage-soufflage de préformes en matériau thermoplastique, ladite opération mettant en oeuvre un procédé de moulage du type connu sous le nom de « boxage ».

L'invention concerne plus particulièrement le support de la partie du moule qui porte l'empreinte de l'embase du récipient, ou de la bouteille, c'est-à-dire le moule du fond, communément appelé le fond de moule.

Cette technique de façonnage d'un « fond boxé », qui est notamment décrite dans le document FR 2 508 004, est utilisée pour mouler des récipients, et en particulier des bouteilles, qui doivent présenter des caractéristiques particulières en matière de rigidité ; elle permet surtout d'améliorer la rigidité structurelle de l'embase de la bouteille.

Cette technique consiste, comme décrit dans le document précité, à déplacer la partie du moule qui sert à façonner l'embase de la bouteille pour repousser cette embase depuis une position qu'elle occupe à la fin de l'opération initiale de soufflage jusqu'à une position qui correspond à celle de l'opération de mise en forme définitive de la bouteille.

Cette opération de moulage avec boxage s'effectue tout en maintenant les parois du moule à une certaine température, de l'ordre de 140°C pour favoriser la deformation du matériau thermoplastique constituant la bouteille. Cette température est atteinte au moyen d'une circulation contrôlée d'un fluide caloporteur.

Après cette mise en forme de l'embase de la bouteille, par le moule du fond (ou fond de moule), ladite embase est refroidie par un courant d'air qui, en même temps, permet de la décoller de l'empreinte dudit moule du fond, avant l'opération finale de démoulage.

Cette partie du moule qui permet de façonner l'embase du récipient est appelée, dans la suite du texte, le fond de moule.

Ce fond de moule est disposé sur un support, lequel support est lui-même aménagé pour coopérer avec le reste du moule, c'est-à-dire avec les deux demi-coquilles qui portent l'empreinte du corps de la bouteille. L'ensemble comprenant les demi-coquilles et le fond de moule constitue le moule proprement dit, lequel moule fait partie de ce que l'on appelle l'unité de moulage, sachant qu'en général une machine de soufflage comporte plusieurs unités de moulage qui sont réparties sur un carrousel.

Le support du fond de moule comprend en fait deux parties qui sont solidarisées par des moyens appropriés : - un socle sur lequel est fixé ledit fond de moule et une sellette sur laquelle ledit socle est fixé de façon amovible.

La sellette est reliée au bâti de l'unité de moulage par l'intermédiaire de moyens de guidage ; cette sellette est en effet mobile par rapport aux deux demi-coquilles du moule, entre une position active qui permet l'opération de moulage de la bouteille et une position inactive où elle se situe en retrait par rapport auxdites demi-coquilles, de façon à permettre l'évacuation de la bouteille moulée hors de l'unité de moulage.

L'alimentation du fond de moule en fluide caloporteur et, comme signalé précédemment, en air de démoulage et refroidissement, s'effectue au moyen de tubulures qui sont greffées sur le socle du support, lesquelles tubulures se prolongent ensuite dans ledit socle, sous la forme de canaux, pour atteindre le moule du fond qui est fixé sur ledit socle.

Le socle du moule du fond se présente en fait, sous la forme d'un vérin, comme décrit notamment dans le document FR 2 714 631. En particulier, le document FR 2 714 631 décrit un support de moule du fond pour le façonnage d'un cul de bouteille en matériau thermoplastique par le procédé dit de « fond boxé », lequel support comprend un socle interposé entre ledit moule du fond et une sellette qui comporte des aménagements, sous la forme d'orifices, ou d'évidements, pour permettre le passage de différentes tubulures, lequel socle est aménagé sous la forme d'un vérin double effet qui est constitué d'un cylindre renfermant un piston dont la tige porte ledit moule du fond, et d'un chapeau, ou semelle, qui ferme ledit cylindre,
laquelle semelle comporte d'une part, des orifices aménagés pour permettre le passage, de façon étanche, des tubulures qui amènent un fluide caloporteur et de l'air de démoulage vers ledit moule du fond et, d'autre part, des zones de greffage des tubulures d'alimentation des chambres dudit vérin, lesquelles tubulures sont toutes disposées parallèlement à l'axe x-x' de déplacement dudit fond de moule. Le vérin **décrit dans le document** FR 2 714 631 permet de déplacer le moule du fond pendant les différentes étapes de l'opération de façonnage de la bouteille.

Ce vérin, qui fonctionne au moyen d'air comprimé, requiert, lui-aussi, une alimentation appropriée, au moyen de tubulures qui se greffent sur le corps dudit vérin, c'est-à-dire sur sa partie fixe.

Les tubulures qui alimentent le moule du fond passent par la partie mobile du vérin, c'est-à-dire par le piston, pour atteindre ledit moule du fond qui est solidaire dudit piston.

Compte tenu des cadences des machines actuelles, une même machine doit présenter une certaine polyvalence, c'est-à-dire qu'elle doit être capable de produire différents types de bouteilles dont les volumes et formats peuvent varier.

Cette polyvalence implique le montage et le démontage des parties du moule qui servent à façonner les bouteilles, c'est-à-dire le moule du fond et les demi-coquilles qui portent l'empreinte du contour externe de la bouteille, lesquelles demi-coquilles sont généralement montées elles aussi sur des supports.

Les supports de ces demi-coquilles sont eux-mêmes portés par une structure constituée de coques, ou équerres, lesquelles coques sont articulées sur le bâti, ou console, de l'unité porte-moule.

Du fait de la présence des différentes alimentations du vérin et du moule du fond, le support de ce moule du fond est relativement encombrant et ceci dans toutes les directions, ce qui a pour conséquence, lors d'un changement de format, d'imposer des changements de pièces comme un changement des supports des demi-coquilles pour les adapter à l'encombrement desdits supports de moule du fond.

Dans le cas de machine totalement polyvalentes, il faut aussi prévoir un changement de la sellette, c' est-à-dire de la pièce qui porte le socle sur lequel est fixé le moule du fond.

Ces contraintes de changement de pièces génèrent des coûts importants au niveau de l'outillage.

La présente invention propose un aménagement de ce support du moule du fond qui permet de remédier aux inconvénients des matériels actuels et de rendre les machines actuelles plus polyvalentes, à tout le moins de rendre plus simples et plus pratiques les opérations qui sont liées aux changements de formats des bouteilles.

La présente invention propose un aménagement du support de moule du fond qui permet de limiter les interventions lors des changements de format des bouteilles et, surtout, de limiter le nombre de pièces à utiliser pour faire face à une large gamme de bouteilles.

Le support de moule du fond est tel que celui du document FR 2 714 631 défini ci-avant. Il est remarquable en ce que la sellette est mobile et est guidée sur le bâti, ou console, de l'unité porte-moule, selon l'axe de déplacement dudit moule du fond, et en ce que la semelle est munie d'un doigt disposé en son centre, sur ledit axe de déplacement, pour coopérer avec des moyens de verrouillage situés sur ladite sellette.

Cette organisation axiale, selon l'invention, des différentes tubulures du support du moule du fond, permet notamment de réduire l'encombrement de ce support et de le confiner dans une enveloppe de forme tubulaire qui est plus en accord avec son environnement et en particulier avec le volume disponible entre les supports des demi-coquilles.

Selon une autre disposition de l'invention, le support comporte des tubulures d'amenée du fluide caloporteur et une tubulure d'amenée de l'air de démoulage, lesquelles tubulures sont greffées directement sur le piston dudit vérin.

Toujours selon l'invention, le support comporte des tubulures d'amenée du fluide caloporteur et une tubulure d'amenée de l'air de démoulage, lesquelles tubulures sont disposées en triangle autour du doigt de verrouillage, traversant à la fois la semelle du socle et la sellette et, en plus, lesdites tubulures coulissent dans ladite semelle et par rapport à ladite sellette.

Selon une autre disposition l'invention, le support comporte des tubulures, pour l'alimentation des chambres du vérin, qui sont greffées directement sur la semelle du socle, lesquelles tubulures traversent la sellette.

Toujours selon l'invention, les différentes tubulures associées au support sont réparties axialement sur une même circonférence qui est centrée sur l'axe du doigt de verrouillage.

Selon une autre disposition de l'invention, le support comporte des tubulures d'alimentation des chambres du vérin et des tubulures de transport du fluide caloporteur, qui sont disposées en carré autour du doigt de verrouillage.

Toujours selon l'invention, le support comporte un dispositif d'assemblage rapide du socle sur la sellette qui est constitué d'un système de verrouillage à billes coopérant avec le doigt de la semelle dudit socle.

Selon une autre disposition de l'invention, le support comporte des moyens de calage angulaire du fond de moule par rapport au bâti de l'unité porte-moule, lesquels moyens de calage sont constitués par les tubulures de transport du fluide caloporteur et de la tubulure d'introduction de l'air de démoulage dans la semelle du socle, lesquelles tubulures font office de guide axial.

L'invention sera encore détaillée à l'aide de la description suivante et des dessins annexés, donnés à titre indicatif, et dans lesquels :
- la figure 1 est une représentation schématique, sous forme de demi-coupes selon I-I, du support du fond de moule selon l'invention, coopérant avec des supports de demi-coquilles pour former une bouteille ;
- la figure 2 est une section selon II-II de la figure 1, montrant la sellette et la répartition des différentes tubulures qui traversent ladite sellette ;
- la figure 3 est une représentation schématique en coupe selon III-III de la figure 2, montrant les tubulures et les aménagements des canaux qui permettent d'alimenter l'une des chambres du piston et, par des demi-coupes multiples, toujours selon III-III, montrant les différentes alimentations du fond de moule.

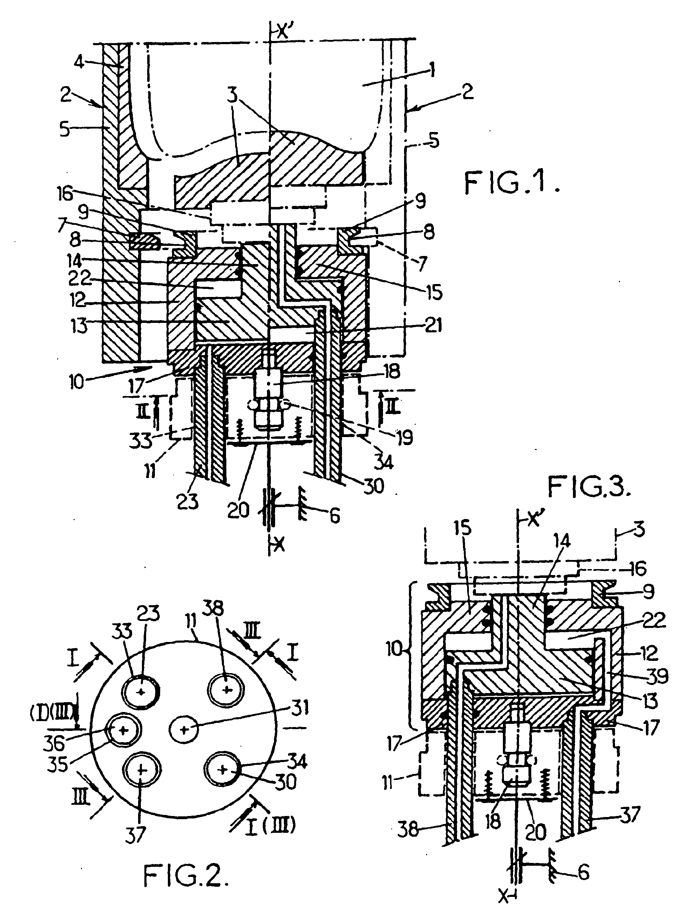

La figure 1, représente, de façon schématique et partielle, un moule de soufflage pour un récipient du type bouteille 1, qui met en oeuvre le procédé de boxage.

Ce moule de soufflage est constitué, de façon classique, de deux demi-moules 2 qui portent les empreintes du corps de la bouteille 1 et d'un moule 3 qui porte l'empreinte de l'embase, ou cul, de ladite bouteille.

Les demi-moules 2 sont généralement constitués d'une demi-coquille 4 qui porte l'empreinte de la bouteille 1 et en particulier l'empreinte de ses parois et chaque demi-coquille 4 est disposée dans un support 5, lequel support 5 de demi-coquille 4 est lui-même fixé sur une structure constituée de coques, ou équerres, non représentées, qui sont solidaires du bâti 6, ou console, de ce que l'on appelle l'unité porte-moule.

Le fond 3 de moule porte l'empreinte de l'embase de la bouteille 1. Ce fond 3 de moule, comme les demi-coquilles 4, est susceptible d'être changé, en fonction des formes de la bouteille 1.

Pour l'opération d'étirage-soufflage, les demi-coquilles 4 sont fermées, comme représenté sur la partie droite de la figure 1 ; elles sont fermées sur le fond 3 de moule et l'ensemble est verrouillé au moyen de tenons 7 disposés sur les supports 5 des demi-coquilles 4, lesquels tenons 7 coopère avec une rainure 8 aménagée sur une bague 9 qui est solidaire du support détaillé ci-après.

Le support du fond 3 de moule comprend plusieurs éléments et en particulier - un socle 10, sur lequel est fixé ledit fond 3 de moule, et - une sellette 11 sur laquelle est fixé, de façon amovible, ledit socle 10.

Ce socle 10 se présente sous la forme d'un vérin pour permettre la mise en oeuvre du procédé dit de fond boxé.

Ce socle 10 comprend un cylindre 12 de vérin dans lequel est logé un piston 13, lequel piston 13 comporte une tige 14 qui traverse, de façon étanche la paroi 15 d'extrémité dudit cylindre 12, du côté du fond 3 de moule. Ce fond 3 de moule est fixé par des moyens appropriés 16 sur l'extrémité de la tige 14 du vérin.

Le cylindre 12 est fermé au moyen d'un chapeau qui forme une semelle 17. Cette semelle 17 repose sur la sellette 11, représentée en traits mixtes fins, et elle est solidarisée à ladite sellette 11 par des moyens qui permettent un assemblage rapide des deux pièces.

La semelle 17 comporte, par exemple, un doigt 18 centré sur l'axe x-x' du vérin, lequel doigt 18 s'étend en saillie dans la sellette 11 et cette sellette 11 comporte un système de verrouillage du type à billes 19 dont la manoeuvre s'effectue par des moyens appropriés, air comprimé ou autre, pour immobiliser ledit doigt 18.

La sellette 11 est mobile pour déplacer le socle 10 entre une position active telle que représentée figure 1 sur l'une des demi-coupes et en particulier sur la demi-coupe située à gauche, afin de réaliser l'opération de soufflage du récipient 1, et une position inactive, dans laquelle ledit socle 10 est escamoté par rapport aux demi-coquilles 4 afin de permettre l'évacuation de la bouteille 1 après son moulage.

La sellette 11 est portée par une platine 20 qui est mobile, guidée par rapport au bâti 6, comme détaillé par exemple, dans le document FR 2 873 320.

Le piston 13 du socle 10 est mobile dans le cylindre 12 sous l'effet d'un fluide, de l'air comprimé, par exemple, qui est introduit dans les chambres disposées de part et d'autre dudit piston 13 : une chambre 21, du côté de la semelle 17 et une chambre 22 du côté de la paroi 15 d'extrémité du cylindre 12.

La chambre 21 est alimentée avec de l'air comprimé sous une pression qui correspond à la pression de soufflage des bouteilles pour réaliser un équilibre, laquelle alimentation s'effectue au moyen d'une tubulure 23 qui est greffée sur une zone située sur la périphérie de la semelle 17. Cette tubulure 23 s'étend parallèlement à l'axe x-x' de la tige 14 du vérin, c'est-à-dire parallèlement à l'axe de déplacement du fond 3 de moule, et elle se situe sur le côté de la semelle 17, laissant libre la partie centrale qui comporte le système d'assemblage rapide et en particulier le doigt 18 de verrouillage.

La partie gauche de la figure 1, montre le vérin et le fond 3 de moule, en position inactive d'attente. Cette position correspond, lorsque les demi-moules 2 sont fermés, à la phase de soufflage qui permet de mettre en volume la préforme pour la transformer en bouteille, en étirant au maximum le matériau constitutif.

Pour cette opération d'étirage-soufflage, les demi-moules 2 sont fermés, comme représenté sur la partie droite de la figure 1. Le socle 10 est ancré sur les supports 5 des demi-coquilles 4 au moyen des tenons 7 et de la rainure 8 aménagée sur la bague 9 qui est solidaire dudit socle 10 et en particulier de la paroi 15 d'extrémité du cylindre 12, du côté de la sortie de la tige 14 du vérin.

Lorsque l'opération de soufflage est terminée, l'embase de la bouteille 1 est boxée au moyen du fond 3 de moule. Ce fond 3 de moule est déplacé, mis en position active, par la tige 14 du piston 13 qui se déplace sous l'effet de l'air comprimé, lors de son introduction sous une forte pression, équivalente à la pression de soufflage, dans la chambre 21, comme représenté sur la partie droite de la figure 1.

Pour effectuer cette opération de façonnage de la bouteille 1, le fond 3 de moule est maintenu en température au moyen d'un fluide caloporteur qui circule dans des circuits aménagés dans ledit fond 3 de moule. Ce fluide caloporteur est introduit, comme représenté figure 1, au moyen d'une tubulure 30 qui est greffée directement sur le piston 13, laquelle tubulure 30 traverse, de façon étanche, la semelle 17.

Cette tubulure 30, comme la tubulure 23, est parallèle à l'axe x-x' du vérin et de la tige 14. Cette tubulure 30 est également positionnée sur le côté de la semelle 17 et sur le rebord du piston 32, pour dégager l'espace central de la sellette 11 qui comporte le système d'assemblage rapide et en particulier le doigt 18.

La tubulure 30 coulisse dans la semelle 17, comme la tige 14 coulisse dans la paroi 15 d'extrémité du cylindre 12, de façon étanche.

La figure 2 montre les différentes tubulures qui alimentent, d'une part, les chambres 21 et 22 du vérin et, d'autre part, le fond 3 de moule, lequel fond 3 de moule est alimenté en fluide caloporteur et il est aussi alimenté en air comprimé pour décoller l'embase du récipient par rapport à l'empreinte dudit fond 3 de moule.

Cette figure 2 montre en fait la sellette 11 qui comporte, dans sa partie centrale, un orifice 31 pour le passage du doigt 18 de verrouillage et, sur sa périphérie, plusieurs orifices, ou évidements, qui permettent le passage des différentes tubulures. Ainsi, on trouve un orifice 33 pour le passage de la tubulure 23 qui sert à alimenter la chambre 21 en air sous pression. On trouve également un orifice 34 qui permet le passage de la tubulure 30 d'introduction du fluide caloporteur au niveau du fond 3 de moule. On trouve également un orifice 35, situé à proximité de l'orifice 33, qui permet le passage d'une tubulure 36, laquelle tubulure 36 permet l'introduction de l'air comprimé au niveau de l'empreinte du fond 3 de moule pour décoller l'embase de la bouteille 1 avant son démoulage. Cette tubulure 36 traverse la semelle 17, de façon étanche et elle est positionnée, par exemple, comme la tubulure 30 qui est représentée figure 1.

On a effectivement mentionné sur cette figure 2, les différentes possibilités de demi-coupes selon I-I pour montrer le positionnement des différentes tubulures et en particulier les tubulures 30 et 36 qui sont greffées, de la même façon, sur le piston 13 et qui traversent, de la même façon, c'est-à-dire de façon étanche, la semelle 17.

La figure 3 est une coupe selon III-III de la figure 2, montrant, d'une part, la tubulure 37 qui est greffée sur la semelle 17 et qui alimente la chambre 22 du vérin et, d'autre part, une tubulure 38 correspondant à la tubulure 30 de la figure 1, laquelle tubulure 38 faisant, par exemple, office de tubulure retour pour le fluide caloporteur.

La tubulure 37 est greffée sur une zone qui se situe en périphérie de la semelle 17 et un circuit 39 est aménagé dans cette semelle 17 et dans le cylindre 12 pour déboucher au niveau de la chambre 22.

La tubulure 38 est greffée, comme la tubulure 30 et comme la tubulure 36, directement sur le piston 13, dans une zone qui se situe sur la périphérie dudit piston. Ces trois tubulures 30, 36, 38, traversent la semelle 17 de façon étanche. Un circuit est aménagé dans le piston 13 et dans la tige 14 de ce dernier en relation avec le fond 3 de moule pour permettre la circulation du fluide caloporteur passant par les tubulures 30 et 38.

Sur cette figure 3, le piston 13 est en position d'attente, c'est-à-dire que le fond 3 de moule est rétracté dans une position qui correspond à la phase de soufflage initiale.

Pour déplacer le piston 13, un fluide, de l'air comprimé par exemple, est introduit sous une pression modeste de 7 bars, dans la chambre 22.

Toutes les tubulures 23, 30, 36, 37 et 38 sont parallèles à l'axe x-x', c'est-à-dire à l'axe de déplacement du fond 3 de moule ; elles sont également réparties, par exemple, sur une circonférence centrée sur ledit axe x-x'.

Les tubulures 30, 36 et 38 sont disposées en triangle autour du doigt 18. Ces trois tubulures 30, 36 et 38 coulissent, de façon étanche, dans la semelle 17 et le guidage de ces trois tubulures dans ladite semelle 17 sert également de moyen pour verrouiller et caler angulairement le fond 3 de moule par rapport au bâti 6 de l'unité porte-moule, par l'intermédiaire du socle 10 et de la sellette 11. Ces différentes tubulures 30, 36 et 38 coulissent également par rapport à la sellette 11 lorsque le fond 3 de moule se déplace, animé par le piston 13.

Le couple de tubulures 33, 37, et le couple de tubulures 30, 38, occupe les angles d'un carré ; chaque couple de tubulures étant disposé sur un côté dudit carré. Ces différentes tubulures ont leur axe qui est situé sur une même circonférence, laquelle circonférence est elle-même centrée sur l'axe x-x' du vérin et du doigt 18.

Chacune des différentes tubulures comporte, à son extrémité, au-delà de la semelle 17, un système de raccord rapide, non représenté, avec les différentes alimentations en air comprimé et en fluide caloporteur.

## Revendications

1. Support de moule du fond pour le façonnage d'un cul de bouteille en matériau thermoplastique par le procédé dit de « fond boxé », lequel support comprend - un socle (10) interposé entre ledit moule (3) du fond et - une sellette (11) qui comporte des aménagements, sous la forme d'orifices, ou d'évidements, pour permettre le passage de différentes tubulures,
lequel socle (10) est aménagé sous la forme d'un vérin double effet qui est constitué - d'un cylindre (12) renfermant un piston (13) dont la tige (14) porte ledit moule (3) du fond et - d'un chapeau, ou semelle (17), qui ferme ledit cylindre (12),
laquelle semelle (17) comporte, d'une part, des orifices aménagés pour permettre le passage, de façon étanche, des tubulures (30, 38, 36) qui amènent un fluide caloporteur et de l'air de démoulage vers ledit moule (3) du fond et, d'autre part, des zones de greffage des tubulures (23, 37) d'alimentation des chambres (21, 22) dudit vérin, lesquelles tubulures sont toutes disposées parallèlement audit axe x-x' de déplacement dudit fond (3) de moule, **caractérisé en ce que**
ladite sellette (11) est mobile et est guidée sur le bâti (6), ou console, de l'unité porte-moule, selon l'axe x-x' de déplacement dudit moule (3) du fond,
et **en ce que** ladite semelle (17) est munie d'un doigt (18) disposé en son centre, sur ledit axe x-x', pour coopérer avec des moyens de verrouillage situés sur ladite sellette (11), lesdits orifices pour permettre le passage des tubulures (30, 38, 36) et lesdites zones de greffage des tubulures (23, 37) étant autour dudit doigt (18).

2. Support selon la revendication 1, **caractérisé en ce qu'**il comporte des tubulures (30, 38) d'amenée du fluide caloporteur et une tubulure (36) d'amenée de l'air de démoulage, lesquelles tubulures sont greffées directement sur le piston (13) du vérin.

3. Support selon la revendication 2, **caractérisé en ce qu'**il comporte des tubulures (30, 38) d'amenée du fluide caloporteur et une tubulure (36) d'amenée de l'air de démoulage, lesquelles tubulures (30, 38, 36) sont disposées en triangle autour du doigt (18) de verrouillage, traversant la semelle (17) et la sellette (11).

4. Support selon la revendication 1, **caractérisé en ce qu'**il comporte des tubulures (23) et (37) pour l'alimentation des chambres (21) et (22), respectivement, du vérin, lesquelles tubulures sont greffées directement sur la semelle (17) du socle (10).

5. Support selon la revendication 1, **caractérisé en ce qu'**il comporte des tubulures (23, 30, 36, 37 et 38) dont les axes sont répartis sur une même circonférence qui est centrée sur l'axe du doigt (18) de verrouillage.

6. Support selon la revendication 1, **caractérisé en ce qu'**il comporte des tubulures (23, 37) d'alimentation des chambres du vérin et des tubulures (30, 38) de transport du fluide caloporteur, lesquelles tubulures sont disposées en carré autour du doigt (18) de verrouillage.

7. Support selon la revendication 1, **caractérisé en ce qu'**il comporte un dispositif d'assemblage rapide du socle (10) sur la sellette (11) qui est constitué d'un système de verrouillage à billes (19) coopérant avec le doigt (18) de la semelle (17).

8. Support selon la revendication 1, **caractérisé en ce qu'**il comporte des moyens de calage angulaire du moule (3) du fond par rapport au bâti (6) qui sont constitués par les tubulures (30, 38) de transport du fluide caloporteur et de la tubulure (36) d'introduction de l'air de démoulage dans la semelle (17) du socle (10), lesquelles tubulures servent de guide.

## Patentansprüche

1. Bodenformhalter für die Herstellung eines Flaschenbodens aus Thermoplast durch das so genannte "Boxed Bottom"-Verfahren, wobei der Halter einen Sockel (10) umfasst, der zwischen der Bodenform (3), und einen Sattel (11) angeordnet ist, wobei der Sattel Ausnehmungen in Form von Öffnungen oder Aussparungen umfasst, um die Durchführung verschiedener Rohre zu ermöglichen,
wobei der Sockel (10) in Form eines Doppeleffektzylinders ausgeführt ist, der aus einem Zylinder (12), der einen Kolben (13) umfasst, dessen Stange (14) die Bodenform (3) trägt, und einer Abdeckung oder Sohle (17) besteht, die den Zylinder (12) verschließt,
wobei die Sohle (17) einerseits Öffnungen umfasst, die derart vorgesehen sind, dass sie die dichte Durchführung der Rohre (30, 38, 36) ermöglichen, die ein flüssiges Kühlmittel und Luft zum Entformen zu der Bodenform (3) leiten, und andererseits Zonen zum Aufsetzen der Rohre (23, 37) zur Versorgung der Kammern (21, 22) des Zylinders umfasst, wobei die Rohre alle parallel zur Bewegungsachse x-x' der Bodenform (3) angeordnet sind,
**dadurch gekennzeichnet, dass**
der Sattel (11) beweglich ist und auf dem Gestell (6) oder der Konsole des Bodenformhalters entlang der Bewegungsachse x-x' der Bodenform (3) geführt wird,
und dass der Sattel (17) mit einem Finger (18) versehen ist, der in seiner Mitte auf der Achse x-x' angeordnet ist, um mit Verriegelungsmitteln zusammenzuwirken, die sich auf dem Sattel (11) befinden, wobei die Öffnungen für die Durchführung der Rohre (30, 38, 36) und die Zonen zum Aufsetzen der Rohre (23, 37) um den Finger (18) herum sind.

2. Halter nach Anspruch 1, **dadurch gekennzeichnet, dass** er Rohre (30, 38) für die Zuleitung eines flüssigen Kühlmittels und ein Rohr (36) für die Zuleitung der Entformungsluft umfasst, wobei die Rohre direkt auf den Kolben (13) des Zylinders aufgesetzt sind.

3. Halter nach Anspruch 2, **dadurch gekennzeichnet, dass** er Rohre (30, 38) für die Zuleitung eines flüssigen Kühlmittels und ein Rohr (36) für die Zuleitung der Entformungsluft umfasst, wobei die Rohre (30, 38, 36) im Dreieck um den Verriegelungsfinger (18) durch die Sohle (17) und den Sattel (11) hindurchgehend angeordnet sind.

4. Halter nach Anspruch 1, **dadurch gekennzeichnet, dass** er Rohre (23) und (37) für die Versorgung der Kammern (21) bzw. (22) des Zylinders umfasst, wobei die Rohre direkt auf die Sohle (17) des Sockels (10) aufgesetzt sind.

5. Halter nach Anspruch 1, **dadurch gekennzeichnet, dass** er Rohre (23, 30, 36, 37 und 38) umfasst, deren Achsen auf einem selben Umfang verteilt sind, der auf der Achse des Verriegelungsfingers (18) zentriert ist.

6. Halter nach Anspruch 1, **dadurch gekennzeichnet, dass** er Rohre (23, 37) zur Versorgung der Kammern des Zylinders und Rohre (30, 38) für den Transport des flüssigen Kühlmittels umfasst, wobei die Rohre im Quadrat um den Verriegelungsfinger (18) angeordnet sind.

7. Halter nach Anspruch 1, **dadurch gekennzeichnet, dass** er eine Vorrichtung für die Schnellmontage des Sockels (10) auf dem Sattel (11) umfasst, die aus einem Verriegelungssystem mit Kugeln (19) besteht, das mit dem Finger (18) der Sohle (17) zusammenwirkt.

8. Halter nach Anspruch 1, **dadurch gekennzeichnet, dass** er Mittel zur Winkelbefestigung der Bodenform (3) in Bezug zum Gehäuse (6) umfasst, die von den Rohren (30, 38) für den Transport des flüssigen Kühlmittels und dem Rohr (36) für die Einleitung der Entformungsluft in die Sohle (17) des Sockels (10) gebildet sind, wobei die Rohre als Führung dienen.

## Claims

1. Mould base support for shaping the bottom of a bottle made of thermoplastic material by what is called the "overstroke base" process, which support comprises - a base (10) interposed between said mould base (3) and - a bolster (11) which comprises arrangements, in the form of holes, or recesses, for allowing the passage of different pipes,
which base (10) is made in the form of a dual-acting cylinder actuator which is constituted by - a cylinder (12) containing a piston (13) the rod (14) of which supports said mould base (3) and by - a cap, or base plate (17), which closes off said cylinder (12),
which base plate (17) comprises, on the one hand, holes designed to allow the sealed passage of the pipes (30, 38, 36) which deliver a heat-transfer fluid and demoulding air to said mould base (3) and, on the other hand, zones for the attachment of the feed pipes (23, 37) for the chambers (21, 22) of said cylinder actuator, which pipes are all arranged parallel to the axis x-x' of displacement of said mould base (3), **characterized in that** said bolster (11) is movable and is guided on the frame (6), or console, of the mould carrier unit, along the axis x-x' of displacement of said mould base (3), and **in that** said base plate (17) is provided with a finger (18) arranged in its centre, on said axis x-x', in order to cooperate with locking means situated on said bolster (11), said holes for allowing the passage of the pipes (30, 38, 36) and said zones for the attachment of the feed pipes (23, 37) being around said finger (18).

2. Support according to claim 1, **characterized in that** it comprises pipes (30, 38) for delivery of the heat-transfer fluid and a pipe (36) for delivery of the demoulding air, which pipes are attached directly to the piston (13) of the cylinder actuator.

3. Support according to claim 2, **characterized in that** it comprises pipes (30, 38) for delivery of the heat-transfer fluid and a pipe (36) for delivery of the demoulding air, which pipes (30, 38, 36) are arranged in a triangle around the locking finger (18), passing through the base plate (17) and the bolster (11).

4. Support according to claim 1, **characterized in that** it comprises feed pipes (23) and (37) for the chambers (21) and (22), respectively, of the cylinder actuator, which pipes are attached directly to the base plate (17) of the base (10).

5. Support according to claim 1, **characterized in that** it comprises pipes (23, 30, 36, 37 and 38) the axes of which are distributed around the same circumference which is centred on the axis of the locking finger (18).

6. Support according to claim 1, **characterized in that** it comprises feed pipes (23, 37) for the chambers of the cylinder actuator and pipes (30, 38) for transport of the heat-transfer fluid, which pipes are arranged in a square around the locking finger (18).

7. Support according to claim 1, **characterized in that** it comprises a device for the rapid assembly of the base (10) on the bolster (11) which is constituted by a ball locking system (19) cooperating with the finger (18) of the base plate (17).

8. Support according to claim 1, **characterized in that** it comprises means for the angular adjustment of the mould base (3) with respect to the frame (6) which are constituted by the pipes (30, 38) for transport of the heat-transfer fluid and the pipe (36) for introduction of the demoulding air into the base plate (17) of the base (10), which pipes act as a guide.
